# EUROPÄISCHE PATENTSCHRIFT

(11) **EP 2 486 577 B1**
(45) Veröffentlichungstag und Bekanntmachung des Hinweises auf die Patenterteilung: **17.08.2016**
(21) Anmeldenummer: 10726435.0
(22) Anmeldetag: 12.06.2010
(51) Int. Cl.: H01H 9/00, H01F 29/04, H02H 7/055

(54) **STUFENSCHALTER**
TAP CHANGER
CHANGEUR DE PRISE EN CHARGE

(30) Priorität: 08.10.2009 DE 102009048813
(43) Veröffentlichungstag der Anmeldung: 15.08.2012
(73) Patentinhaber: Maschinenfabrik Reinhausen GmbH, 93059 Regensburg (DE)
(72) Erfinder: DOHNAL, Dieter, 93138 Lappersdorf (DE); HAMMER, Christian, 93059 Regensburg (DE); KRAEMER, Axel, 93047 Regensburg (DE)
(86) Internationale Anmeldenummer: PCT/EP2010/003555
(87) Internationale Veröffentlichungsnummer: WO 2011/042070

(56) Entgegenhaltungen:
- DE-A1- 1 901 105
- DE-A1- 1 917 692
- DE-A1- 4 124 431
- DE-B1- 2 348 091
- US-A- 4 081 741

## Beschreibung

Die Erfindung betrifft einen Stufenschalter zur unterbrechungslosen Umschaltung zwischen Wicklungsanzapfungen eines Stufentransformators gemäß dem Oberbegriff des ersten Patentanspruches.

Aus der DE 20 21 575 ist ein Stufenschalter bekannt, der insgesamt vier Vakuumschaltröhren pro Phase aufweist. In jedem der beiden Lastzweige sind jeweils eine Vakuumschaltröhre als Hauptkontakt und jeweils eine weitere Vakuumschaltröhre, in Reihenschaltung mit einem Überschaltwiderstand, als Widerstandskontakt vorgesehen.
Bei einer unterbrechungslosen Lastumschaltung von der bisherigen Wicklungsanzapfung n auf eine neue, vorgewählte Wicklungsanzapfung n+1 wird zunächst der Hauptkontakt der abschaltenden Seite geöffnet, darauf schließt der Widerstandskontakt der übernehmenden Seite, so dass zwischen den beiden Stufen n und n+1 ein durch die Überschaltwiderstände begrenzter Ausgleichsstrom fließt. Nachdem der bisher geschlossene Widerstandskontakt der abschaltenden Seite geöffnet hat, schließt dann der Hauptkontakt der übernehmenden Seite, so dass der gesamte Laststrom von der neuen Wicklungsanzapfung n+1 zur Lastableitung führt; die Umschaltung ist beendet.

Die bei diesem bekannten Stufenschalter und zahlreichen ähnlichen bekannten Ausführungsformen verwendeten Vakuumschaltröhren statt herkömmlicher mechanischer Kontakte zur Lastumschaltung besitzen eine Reihe von Vorteilen: Da die Kontakte selbst in Vakuum gekapselt sind, lassen sich hohe Schaltleistungen realisieren. Die gekapselten, hermetisch abgeschlossenen Kontakte können außerdem nicht zur Verrußung und Verschmutzung des sie umgebenden Isolieröles im Stufenschalter durch Kontaktabbrand oder Lichtbögen führen. Weiterhin sind Vakuumschaltröhren inzwischen als sehr kompakte Bauteile verfügbar; sie erfordern einen geringen Platzbedarf und auch nur relativ geringe Betätigungskräfte.

Bei verschiedenen Anwendungsfällen solcher bekannter Stufenschalter mit Vakuumschaltröhren zur Regelung von Leistungstransformatoren ist jedoch eine hohe Stoßspannungsfestigkeit, bis zu 100 kV und deutlich darüber hinaus, erforderlich.
Solche unerwünschten Stoßspannungen, deren Höhe wesentlich durch den Aufbau des Stufentransformators und der Wicklungsteile zwischen den einzelnen Anzapfstufen bedingt ist, sind zum einen Blitzstoßspannungen, die sich durch das Einschlagen von Blitzen im Netz ergeben. Zum anderen können auch Schaltstoßspannungen auftreten, die durch nicht vorhersehbare Schaltstöße im zu regelnden Netz verursacht sind.
Bei nicht ausreichender Stoßspannungsfestigkeit des Stufenschalters kann es zu kurzzeitigem Stufenkurzschluss bzw. unerwünschtem Durchschlag an der Keramik bzw. dem Dampfschirm betroffener Vakuumschaltröhren im nicht den Laststrom führenden Lastzweig kommen, was nicht nur deren Langzeitschädigung verursachen kann, sondern generell unerwünscht ist.

Aus der DE 23 57 209 A und der DE 26 04 344 A ist es bereits bekannt, zur Bekämpfung zu hoher Stoßspannungsbeanspruchungen zwischen den Lastzweigen Schutzfunkenstrecken oder auch spannungsabhängige Widerstände oder auch beides vorzusehen; diese Mittel sind jedoch in verschiedenen Fällen unzureichend und können schädliche Stoßspannungsbeanspruchungen in ihrer Wirkung nicht oder nicht vollständig ausschließen.

Aus der DE 19 01 105 A1 ist eine Schaltungsanordnung zum unterbrechungslosen Lastumschalten bekannt. Diese weist vier Vakuumschalter, zwei Impedanzen und einen einzigen brückenden Kontaktschalter auf. Jeweils zwei Vakuumschalter und eine Impedanz eines Lastzweiges sind einem Wählerarm zugeordnet. Der einzige brückende Kontaktschalter dient der Kommutierung und ist somit nur während der Umschaltung in der Lage den Lastkreis von dem einen Wählerarm über beide Wählerarme auf den anderen Wählerarm umzuschalten. Vor der Umschaltung ist es nicht möglich beide Lastzweige gleichzeitig mit der Lastableitung zu verbinden. Dieses Dokument bildet den Oberbegriff des ersten Anspruchs.

Aufgabe der Erfindung ist es, einen Stufenschalter der eingangs genannten Art mit hoher Stoßspannungsfestigkeit, auch als a0-Festigkeit bezeichnet, anzugeben.

Diese Aufgabe wird durch einen Stufenschalter mit den Merkmalen des Anspruchs 1 gelöst.
Die Unteransprüche betreffen vorteilhafte Weiterbildungen der Erfindung.

Der Erfindung liegt die allgemeine Idee zugrunde, durch zusätzliche mechanische Schaltelemente in jedem Lastzweig eine galvanische Trennung des jeweils nicht den Laststrom führenden Lastzweiges mit der Lastumschaltung zu erreichen.
Dadurch werden eventuell auftretende Stoßspannungen unschädlich für die Vakuumschaltröhren im jeweils nicht den Laststrom führenden Lastzweig - dies gilt gleichermaßen für die als Hauptkontakt als auch für die als Widerstandskontakt wirkende Vakuumschaltröhre dieses Zweiges.

Die Erfindung soll nachfolgend an Hand von einem Ausführungsbeispiel näher erläutert werden.

Es zeigen:
- Figur 1: eine Ausführungsform eines erfindungsgemäßen Stufenschalters
- Figur 2: die Schaltsequenz eines solchen Stufenschalters von einer Umschaltung von der Wicklungsanzapfung n unterbrechungslos auf die Wicklungsanzapfung n+1
- Figur 3: eine Ausführung zur besseren Erläuterung des erfindungsgemäßen Stufenschalters
- Figur 4: wiederum die Schaltsequenz zur Erläuterung des Stufenschalters
- Figur 5: eine abgewandelte Schaltung zur Erläuterung der Ausführungsform.

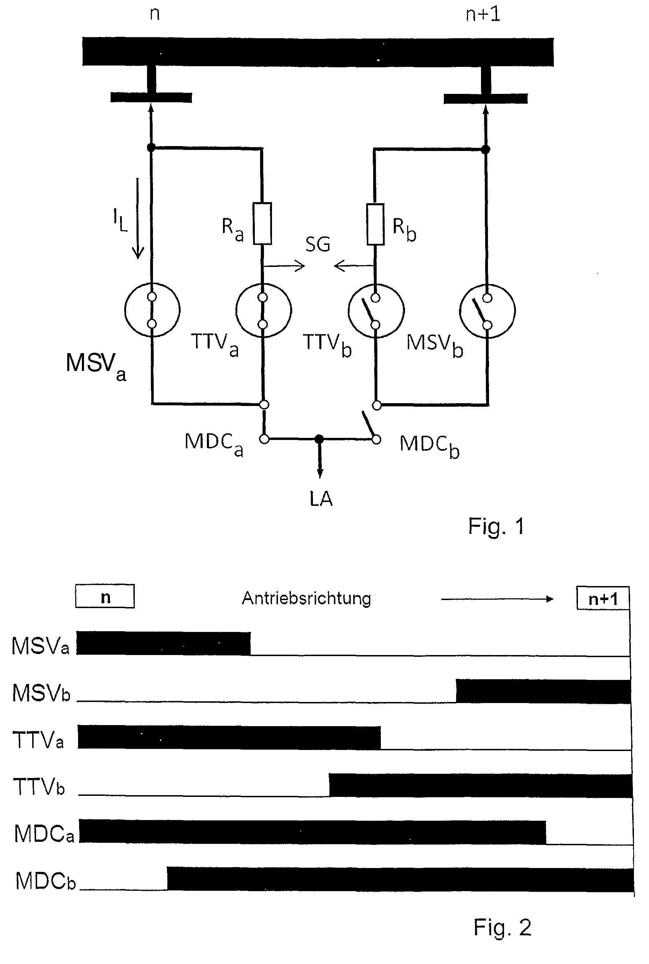

In Figur 1 ist eine Ausführungsform eines erfindungsgemäßen Stufenschalters gezeigt. Er weist einen ersten Lastzweig auf, in dem sich eine als Hauptkontakt wirkende Vakuumschaltröhre MSVₐ sowie parallel dazu ein Überschaltwiderstand Rₐ sowie eine als Widerstandskontakt wirkende Vakuumschaltröhre TTVₐ befinden. Der zweite Lastzweig besitzt ganz analog eine Vakuumschaltröhre MSV_{b} sowie parallel dazu einen weiteren Überschaltwiderstand R_{b} und eine Vakuumschaltröhre TTV_{b}. Bis hierhin entspricht die Schaltung dem Stand der Technik.

Erfindungsgemäß ist zwischen der elektrischen Verbindung der beiden Vakuumschaltröhren MSVₐ und TTVₐ und der Lastableitung LA ein erster mechanischer Schalter MDCₐ vorgesehen. Ganz analog ist zwischen der elektrischen Verbindung der beiden Vakuumschaltröhren TTV_{b} und MSV_{b} des anderen Lastzweiges und der Lastableitung ein weiteres mechanisches Schaltelement MDC_{b} vorgesehen.

Beide mechanischen Schaltelemente MDCₐ, MDC_{b} sind als Trennschalter ausgebildet; sie dienen nicht der Kommutierung, sondern zur Freischaltung, d. h. der galvanischen Trennung des nicht den Laststrom führenden Lastzweiges.

Figur 2 zeigt die Schaltsequenz eines solchen Stufenschalters bei der Umschaltung von der Wicklungsanzapfung n auf die Wicklungsanzapfung n+1. Die Ausgangslage, bei der die Anzapfung n beschaltet ist, entspricht der in Figur 1 dargestellten Stellung der einzelnen Schaltelemente. Die Umschaltung erfolgt in folgenden Schritten:
- MDC_{b} schließt
- MSVₐ öffnet
- TTV_{b} schließt
- TTVₐ öffnet
- MSV_{b} schließt
- MDCₐ öffnet; die Umschaltung ist abgeschlossen.

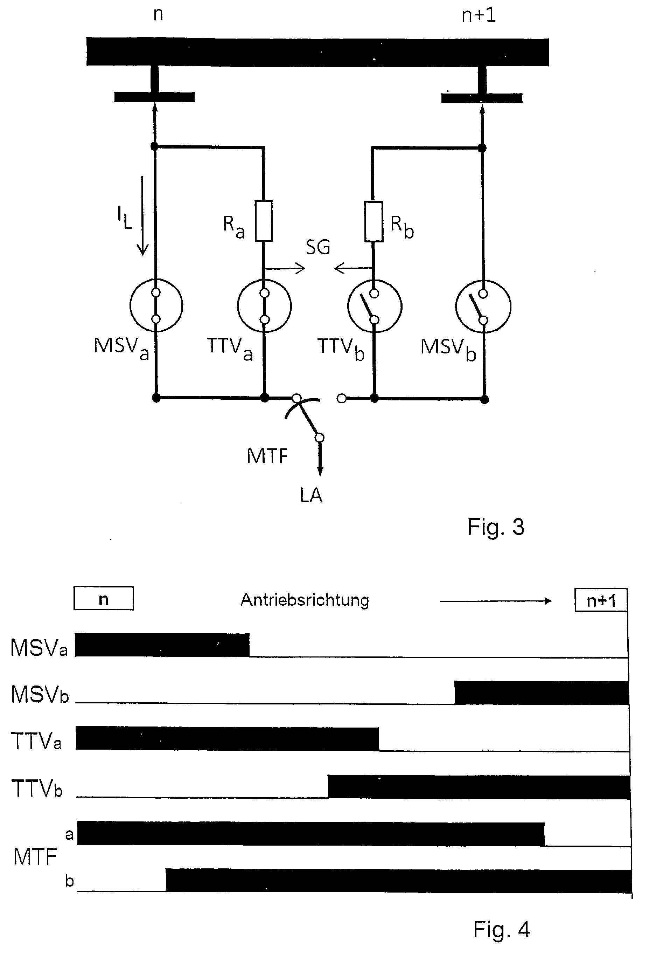

Figur 3 zeigt eine Ausführung zur Erläuterung des erfindungsgemäßen Stufenschalters, bei der zwischen der elektrischen Verbindung der Vakuumschaltröhren MSVₐ, TTVₐ, des ersten Lastzweiges sowie MSV_{b} und TTV_{b} des zweiten Lastzweiges ein brückender Umschaltkontakt MTF vorgesehen ist, dessen Wurzelkontakt zur Lastableitung LA führt. Bei dieser Ausführung ist der mechanische Kontakt MTF derart ausgeführt, dass er je nach Schaltstellung jeden der beiden Lastzweige oder auch - in brückender Position - beide Lastzweige mit der Lastableitung LA verbinden kann. Er dient also hier zur Kommutierung, wie im Stand der Technik erläutert wurde.

Figur 4 zeigt wiederum die Schaltsequenz der Ausführung, wobei die in Figur 3 gezeigte Position der einzelnen Schaltelemente wiederum dem stationären Zustand auf Position n entspricht. Nacheinander laufen bei einer Umschaltung auf eine Position n+1 folgende Schaltschritte ab:
- MTF gerät in brückende Position und verbindet beide Lastzweige
- MSVₐ öffnet
- TTV_{b} schließt
- TTVₐ öffnet
- MSV_{b} schließt
- MTF verlässt die brückende Position und verbindet ausschließlich den anderen Lastzweig b mit der Lastableitung LA; die Lastumschaltung ist abgeschlossen.

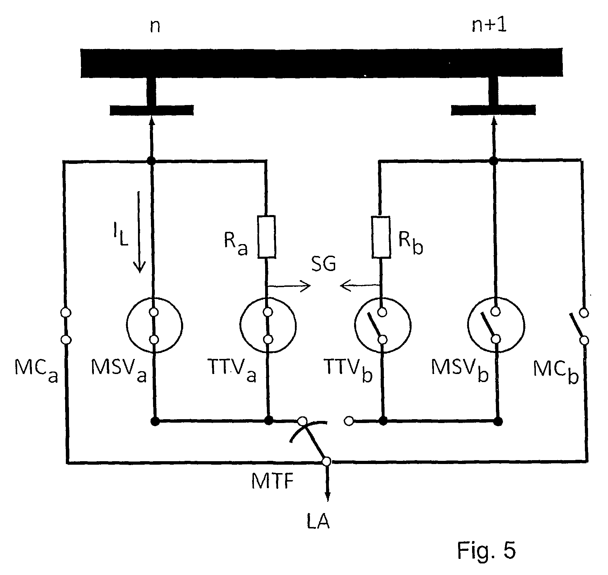

Figur 5 zeigt eine abgewandelte Schaltung der in den Figuren 3 und 4 erläuterten Ausführung zur Erläuterung der Erfindung. Dabei sind in beiden Lastzweigen zusätzliche Dauerhauptkontakte MCₐ bzw. MC_{b} vorgesehen, die auf an sich bekannte Weise im stationären Betrieb die Dauerstromführung übernehmen und die jeweilige als Hauptkontakt wirkende Vakuumschaltröhre MSVₐ bzw. MSV_{b} entlasten.
Eine solche zusätzliche Anordnung von Dauerhauptkontakten ist bei der in den Figuren 1 und 2 erläuterten Ausführungsform der Erfindung möglich.

Weiterhin ist es im Rahmen der Erfindung natürlich auch möglich, die bekannten Funkenstrecken oder auch spannungsabhängigen Widerstände zwischen den Lastzweigen zusätzlich vorzusehen.

Diese Ausführungsform der Erfindung beruht auf einer erfinderischen Idee und löst die Aufgabe der Erfindung: Sie verhindert schädliche Auswirkungen von hohen Stoßspannungen auf den Stufenschalter im Allgemeinen und die betroffen Vakuumschaltröhren im Besonderen.

## Patentansprüche

1. Stufenschalter zur unterbrechungslosen Umschaltung zwischen Wicklungsanzapfungen eines Stufentransformators,
wobei zwei Lastzweige vorgesehen sind,
wobei jeder Lastzweig eine als Hauptkontakt wirkende Vakuumschaltröhre und parallel dazu eine Reihenschaltung aus einem Überschaltwiderstand und einer weiteren Vakuumschaltröhre aufweist,
wobei beide Lastzweige mit einer gemeinsamen Lastableitung verbindbar sind,
wobei zwischen der elektrischen Verbindung der beiden Vakuumschaltröhren (MSVₐ, TTVₐ) des ersten Lastzweiges und der Lastableitung (LA) ein erstes mechanisches Schaltelement (MDCₐ) vorgesehen ist
und wobei zwischen der elektrischen Verbindung der beiden Vakuumschaltröhren (MSV_{b}, TTF_{b}) des zweiten Lastzweiges und der Lastableitung (LA) ein weiteres mechanisches Schaltelement (MDC_{b}) vorgesehen ist,
**dadurch gekennzeichnet,**
**dass** beide mechanischen Schaltelemente (MDCₐ, MDC_{b}) als unabhängig voneinander betätigbare Trennschalter ausgebildet sind,
**dass** im stationären Betrieb das im den Laststrom führenden Lastzweig angeordnete mechanische Schaltelement (MDCₐ) geschlossen und das im nicht den Laststrom führenden Lastzweig angeordnete mechanische Schaltelement (MDC_{b}) geöffnet ist
und **dass** vor Beginn einer unterbrechungslosen Umschaltung das im nicht den Laststrom führenden Lastzweig angeordnete Schaltelement (MDC_{b}) geschlossen wird und erst nach Abschluss jeder Umschaltung das in dem dann nicht mehr den Laststrom führenden anderen Lastzweig angeordnete andere mechanische Schaltelement (MDCₐ) geöffnet wird.

2. Stufenschalter nach Anspruch 1,
**dadurch gekennzeichnet,**
**dass** parallel zu jeden Lastzweig zusätzliche Dauerhauptkontakte (MCₐ, MC_{b}) vorgehsehen sind, die im stationären Betrieb die Dauerstromführung übernehmen und direkt mit der Lastableitung (LA) in Verbindung stehen.

3. Stufenschalter nach Anspruch 1 oder 2,
**dadurch gekennzeichnet,**
**dass** zwischen den Reihenschaltungen in beiden Lastzweigen aus Überschaltwiderstand (Rₐ, R_{b}) und Vakuumschaltröhre (TTVₐ, TTV_{b}) mindestens ein spannungsabhängiger Widerstand und/oder mindestens eine Funkenstrecke vorgesehen ist bzw. sind.

## Claims

1. Tap changer for uninterrupted switching over between winding taps of a tapped transformer,
wherein two load branches are provided,
wherein each load branch comprises a vacuum interrupter acting as a main contact and parallel thereto a series connection of a switching-over resistance and a further vacuum interrupter,
wherein the two load branches are connectible with a common load diverter, wherein a first mechanical switching element (MDCₐ) is provided between the electrical connection of the two vacuum interrupters (MSVₐ, TTVₐ) of the first load branch and the load diverter (LA) and
wherein a further mechanical switching element (MDC_{b}) is provided between the electrical connection of the two vacuum interrupters (MSV_{b}, TTV_{b}) of the second load branch and the load diverter (LA),
**characterised in that**
the two mechanical switching elements (MDCₐ, MDC_{b}) are constructed as isolating switches actuable independently of one another,
in the stationary state the mechanical switching element (MDCₐ) arranged in the load branch conducting the load current is closed and the mechanical switching element (MDC_{b}) arranged in the load branch not conducting the load current is opened and
prior to start of an uninterrupted switching-over process the switching element (MDC_{b}) arranged in the load branch not conducting the load current is closed and the other mechanical switching element (MDCₐ) arranged in the other load branch then no longer conducting the load current is opened only after the conclusion of each switching-over process.

2. Tap changer according to claim 1, **characterised in that** additional permanent main contacts (MCₐ, MC_{b}), which in stationary operation take over the permanent current conduction and are directly connected with the load diverter (LA), are provided in parallel with each load branch.

3. Tap changer according to claim 1 or 2, **characterised in that** at least one voltage-dependent resistance and/or at least one spark gap is or are provided between the series connections in the two load branches of switching-over resistance (Rₐ, R_{b}) and vacuum interrupter (TTVₐ, TTV_{b}).

## Revendications

1. Commutateur à gradins pour permettre la commutation sans interruption entre des prises d'enroulement d'un transformateur à gradins, dans lequel :
deux branches de charge sont prévues,
chaque branche de charge comprend un tube de commutation à vide faisant office de contact principal et parallèlement à celui-ci un montage en série d'une résistance de passage et d'un autre tube de commutation à vide,
les deux branches de charge peuvent être reliées à une évacuation de charge commune,
entre la liaison électrique des deux tubes de commutation à vide (MSVₐ ; TTVₐ) de la première branche de charge et l'évacuation de charge (LA) il est prévu un premier élément de commutation mécanique (MDCa), et
entre la liaison électrique des deux tubes de commutation sous vide (MSV_{b}, TTF_{b}) de la seconde branche de charge et la dérivation de charge (LA) il est prévu un autre élément de commutation mécanique (MDC_{b}),
**caractérisé en ce que**
les deux éléments de commutation mécanique (MDCₐ, MDC_{b}) sont réalisés sous la forme de sectionneurs pouvant être actionnés indépendamment l'un de l'autre,
à l'état stationnaire, l'élément de commutation mécanique (MDCₐ) monté dans la branche de charge conduisant le courant de charge est fermé et l'élément de commutation mécanique (MDC_{b}) monté dans la branche de charge ne conduisant pas le courant de charge est ouvert, et
avant le début d'une commutation sans interruption, l'élément de commutation (MDC_{b}) monté dans la branche de charge ne conduisant pas le courant de charge est fermé, et l'autre élément de commutation mécanique (MDCₐ) monté dans l'autre branche de charge ne conduisant pas le courant de charge n'est ouvert qu'après achèvement de chaque commutation.

2. Commutateur à gradins conforme à la revendication 1,
**caractérisé en ce que**
parallèlement à chaque branche de charge il est prévu des contacts principaux permanents (MCₐ, MC_{b}) supplémentaires qui assurent à l'état stationnaire le passage du courant permanent et sont directement reliés à l'évacuation de charge (LA).

3. Commutateur à gradins conforme à la revendication 1 ou 2,
**caractérisé en ce que**
entre les montages en série dans les deux branches de charge de résistances de passage (Rₐ, R_{b}) et de tubes de commutation à vide (TTVₐ, TTV_{b}) il est prévu au moins une résistance dépendant de la tension et/ou au moins un éclateur à étincelles.
